# EUROPÄISCHE PATENTANMELDUNG

(11) **EP 0 687 620 A1**
(43) Veröffentlichungstag der Anmeldung: **20.12.1995**
(21) Anmeldenummer: 95101932.2
(22) Anmeldetag: 13.02.1995
(51) Int. Cl.: B62K 15/00, B62K 21/12

(54) **Faltbarer Fahrradlenker**

(30) Priorität: 16.06.1994 DE 9409766 U
(71) Anmelder: DIAMANT FAHRRADWERKE GMBH, D-09117 Chemnitz (DE)
(72) Erfinder: Müller, Hartwig, Dr.-Ing., D-09126 Chemnitz (DE)
(74) Vertreter: Grünecker, Kinkeldey, Stockmair & Schwanhäusser Anwaltssozietät

(57) **Zusammenfassung**

Ein faltbarer Fahrradlenker (L) mit einem Lenkerschaft (3), an dem die Lenkerhälften (1, 2) an einem schaftfesten Halteteil (8) zwischen wenigstens einer Fahrstellung und einer Faltstellung schwenkbar sind und mit einer Spannvorrichtung (S) zumindest in der Fahrstellung festlegbar sind, ist jedes innenliegende Lenkerhälften-Ende (E) als Eingriffselement (X) ausgebildet, für das am Halteteil (8) ein Gegeneingriffselement (Y) vorgesehen ist, und ist in zumindest einer Fahrstellung (F, F') jeder Lenkerhälfte (1, 2) zwischen dem Eingriffselement (X) und dem Gegeneingriffselement (Y) unter dem Spanndruck der Spannvorrichtung (S) ein formschlüssiger Eingriff herstellbar.

## Beschreibung

Die Erfindung betrifft einen faltbaren Fahrradlenker der im Oberbegriff des Patentanspruchs 1 angegebenen Art.

Bei einem aus G 94 03 617 bekannten Faltfahrrad sind die beiden Lenkerhälften nach Lösen eines gemeinsamen Spannhebels zur Verringerung der Transport- oder Faltabmessungen des Faltfahrrades zueinander faltbar. In der Fahrstellung und in der Faltstellung lassen sich die Lenkerhälften durch Reibschluß festlegen.

Ein ähnliches Prinzip ist aus DE-C-39 31 798 bekannt. Die beiden Lenkerhälften werden an ihren schwenkbaren Enden zwischen zwei Bremsplatten eingespannt, die mit Spannschrauben einen Reibschluß zum Festlegen der Lenkerhälften herstellen. Die Spannschrauben bilden gleichzeitig die Schwenkachsen der Lenkerhälften.

Aus DE-A-41 05 801 ist es bekannt, die schwenkbaren Lenkerhälften, die sich in der Fahrstellung mit ihren innenliegenden Enden überkreuzen, mittels Polyäthylen-Bremsscheiben und Spannschrauben festzuklemmen.

Bei den bekannten Fahrradlenkern ist der Aufbau kompliziert. Die Handhabung erfordert verhältnismäßig viel Geschick. Der Reibschluß zum Festlegen der Lenkerhälften birgt die Gefahr einer unsachgemäßen Festlegung in sich, weil eine oder beide Lenkerhälften unter größeren oder stoßartigen Belastungen nachgeben können. Außerdem obliegt es dem Benutzer des Fahrrades, die Lenkerhälften in der Fahrstellung ausreichend festzulegen, wobei der Hersteller des Fahrrads oder des Fahrradlenkers keinen Einfluß darauf hat, ob die Lenkerhälften tatsächlich ordnungsgemäß und ausreichend festgelegt werden. Außerdem kann es für den Fahrradbenutzer schwierig sein, die korrekte Fahrstellung der Lenkerhälften einzujustieren.

Der Erfindung liegt die Aufgabe zugrunde, einen baulich einfachen und leicht handhabbaren Fahrradlenker der eingangs genannten Art zu schaffen, bei dem bereits herstellerseits sichergestellt ist, daß der spätere Fahrradbenutzer zumindest die Fahrstellung der Lenkerhälften korrekt einstellt, und bei dem die korrekt eingestellten Lenkerhälften auch bei hohen Belastungen unverrückbar festgelegt sind.

Die gestellte Aufgabe wird erfindungsgemäß mit den Merkmalen des Patentanspruchs 1 gelöst.

Bei Betätigung der Spannvorrichtung stellt sich zwischen den Eingriffselementen und den Gegeneingriffselementen ein Formschluß ein, mit dem die Lenkerhälften zumindest in der Fahrstellung ordnungsgemäß und unverrückbar festgelegt sind, und zwar weitgehend unabhängig davon, wie fest der Fahrradbenutzer die Spannvorrichtung anzieht. Damit ist vom Hersteller des Fahrrads vorbestimmt, daß der Fahrradbenutzer später jederzeit eine korrekte Einstellung der Lenkerhälften in der Fahrstellung vornimmt. Der Formschluß stellt sicher, daß auch unter groben Belastungen, wie sie beim Fahrradfahren auftreten können, die Lenkerhälften nicht nachgeben oder wackeln. Der Fahrradlenker ist baulich einfach, weil die innenliegenden Enden der Lenkerhälften gleichzeitig die Eingriffselemente bilden, die direkt mit dem Gegeneingriffselement des Halteteils zusammenarbeiten. Der faltbare Fahrradlenker läßt sich bei Falt-, Klapp- oder auch bei normalen Fahrrädern verwenden.

Bei der Ausführungsform gemäß Anspruch 2 wird durch die vorbestimmte begrenzte Eingriffstiefe ein Sicherheitsbereich geschaffen, innerhalb dessen die Lenkerhälften korrekt festgelegt sind. Die Lenkerhälften lassen sich erst dann zusammenfalten, wenn der formschlüssige Eingriff über die gesamte Eingriffstiefe gelöst ist.

Eine baulich einfache, funktionelle und bequem handhabbare Ausführungsform geht aus Anspruch 3 hervor. Die Eingriffselemente bzw. die innenliegenden Enden der Lenkerhälften werden zwischen dem Halteteil und dem Druckstück sehr sicher und belastbar festgelegt. Aufgrund nur weniger Einzelteile wird ein geringes Gewicht erreicht. Die Herstellung und Montage des Fahrradlenkers sind vereinfacht.

Zweckmäßig ist ferner die Ausführungsform gemäß Anspruch 4. Das Gegeneingriffselement am Halteteil definiert genau die Fahrstellung oder die möglichen Fahrstellungen.

Bei der Ausführungsform gemäß Anspruch 5 wird ein sehr starker Formschluß erreicht. Die Lenkerhälften sind in der Fahrstellung unverrückbar festgelegt. Es genügt bereits ein leichter Spanndruck der Spannvorrichtung, um ein Wackeln der Lenkerhälften zu unterbinden. Die Handhabung ist einfach.

Besonders zweckmäßig ist die Ausführungsform gemäß Anspruch 6, weil die Lenkerhälften auch in wenigstens einer weiteren Fahrstellung und/oder in der Faltstellung formschlüssig festgelegt sind. Die weitere Fahrstellung kann für den Fahrradbenutzer bequemer sein als die grundsätzliche Fahrstellung. Die Festlegung in der Faltstellung hat den Vorteil, daß die Vorderradgabel durch die ein oberes Rahmenrohr fest zwischen sich einschließenden Lenkerhälften stabilisiert ist.

Eine alternative Ausführungsform geht aus Anspruch 7 hervor. In der V- oder U-Längsnut der Querleiste werden die inneren Enden der Lenkerhälften großflächig formschlüssig festgelegt. Es kann der Zylinderumfang der als Rohr oder Vollrohr ausgebildeten Lenkerhälfte als Eingriffselement genutzt werden. Es ist aber auch denkbar, das innenliegende Ende der Lenkerhälfte zu profilieren, um den Formschluß zu verstärken.

Bei der Ausführungsform gemäß Anspruch 8 lassen sich die Lenkerhälften in den Aufnahmen auch in anderen Stellungen, z.B. in einer weiteren Fahrstellung und/oder in der Faltstellung formschlüssig festlegen, wobei auch hier die Spannvorrichtung benutzt wird.

Eine funktionssichere, bequem zu handhabende und verschleißarme Ausführungsform geht aus Anspruch 9 hervor. Die Druckfeder wird dazu benutzt, das Druckstück vom Halteteil wegzudrücken, sobald die Spannvorrichtung gelöst wird, damit sich die Lenkerhälften einfach falten lassen.

Bei der Ausführungsform gemäß Anspruch 10 gleicht die Feder den Verschleiß aus. Außerdem werden die Lenkerhälften unter der Kraft der verformten Feder sehr stabil formschlüssig verriegelt.

Die Ausführungsform gemäß Anspruch 11 hat eigenständige erfinderische Bedeutung, denn diese Merkmale lassen sich auch bei anderen faltbaren Fahrradlenkern als den vorerwähnten verwirklichen. Die Grobverriegelungsvorrichtung hat eine Sicherheitsfunktion, weil sie beim Verschwenken der Lenkerhälften in die Fahrstellung selbsttätig einrastet und den Lenker benutzbar macht, obwohl, ggfs. aus Versehen, die Spannvorrichtung noch nicht oder nicht ausreichend betätigt ist. Auch stellt die Grobverriegelungsvorrichtung sicher, daß beim unbeabsichtigten Lösen der Spannvorrichtung die Lenkerhälften noch festgelegt und ordnungsgemäß benutzbar bleiben.

Bei der Ausführungsform gemäß Anspruch 12 ist das vorerwähnte Ziel auf baulich einfache und funktionssichere Weise erreicht. Das Steckende der Sicherungshülse gleitet über die Vorsprünge und verriegelt sozusagen die Lenkerhälften gegen eine Verschwenkung um die Achsen. Da der Eingriff zwischen dem Steckende und den Vorsprüngen im Abstand von der Achse vorgenommen wird, ist diese Grobverriegelung stabil.

Bei der Ausführungsform gemäß Anspruch 13 ist dafür Sorge getragen, daß die Grobverriegelungsvorrichtung sicher wirksam wird.

Anhand der Zeichnung werden Ausführungsformen des Erfindungsgegenstandes erläutert. Es zeigen:
- Fig. 1: schematisch eine Draufsicht auf einen faltbaren Fahrradlenker in der Fahrstellung,
- Fig. 2: den faltbaren Fahrradlenker von Fig. 1 in der Faltstellung,
- Fig. 3: eine erste Ausführungsform eines Fahrradlenkers in einem Längsschnitt,
- Fig. 4: einen Querschnitt in der Ebene IV-IV von Fig. 3,
- Fig. 5: eine weitere Ausführungsform eines Fahrradlenkers in einem Längsschnitt,
- Fig. 6: einen Querschnitt in der Ebene VI-VI von Fig. 5, und
- Fig. 7: einen Horizontalschnitt in der Ebene VII-VII von Fig. 6.

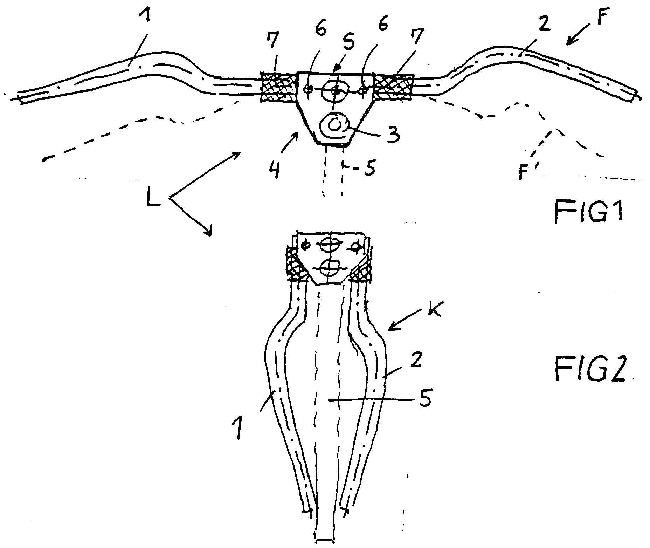

Ein faltbarer Fahrradlenker L gemäß den Fig. 1 und 2 kann bei einem herkömmlichen Fahrrad genauso verwendet werden wie bei einem Falt- oder Klappfahrrad. Bei jedem Fahrradtyp dient der faltbare Fahrradlenker L dazu, die Verpackungabmessungen oder Faltabmessungen in Breitenrichtung zu verringern und ggfs. in der Faltstellung K (Fig. 2) ein unbeabsichtigtes Verdrehen der Vorderradgabei zu verhindern.

Gemäß den Fig. 1 und 2 besteht der Lenker L aus zwei in etwa spiegelbildlichen Lenkerhälften 1, 2 beliebiger Form, die bei der gezeigten Ausführungsform mit einem Vorbau 4 an einem Lenkerschaft 3 angebracht sind, an dem in üblicher Weise die Vorderradgabel befestigt ist, und der mit der Vorderradgabel in einem Lenkerrohr (nicht gezeigt) drehbar gelagert ist. Zum Lenkerschaft 3 erstreckt sich eine obere Rahmenstrebe 5 (gegebenenfalls können auch zwei nebeneinanderliegende, beabstandete Rahmenstreben 5 vorgesehen sein). Die beiden Lenkerhälften 1, 2 sind um beabstandete und im wesentlichen zueinander parallele Achsen 6 schwenkbar am Vorbau 4 gelagert und lassen sich in der in ausgezogenen Linien gezeigten Fahrstellung F mittels einer Spannvorrichtung S formschlüssig festlegen. Zusätzlich können als Grobverriegelungsvorrichtungen auf den Lenkerhälften 1, 2 verschiebbare Sicherungshülsen 7 vorgesehen sein. In Fig. 1 ist angedeutet, daß mit der Spannvorrichtung gegebenenfalls wenigstens eine weitere geänderte Fahrstellung F' eingestellt werden kann. In Fig. 2 sind die Lenkerhälften 1, 2 in ihrer Faltstellung K zur oberen Rahmenstrebe 5 hin geklappt, wobei die gegebenenfalls vorgesehenen Sicherungshülsen 7 aus einem formschlüssigen Eingriff gelöst und gegen Federkraft zurückgeschoben sind.

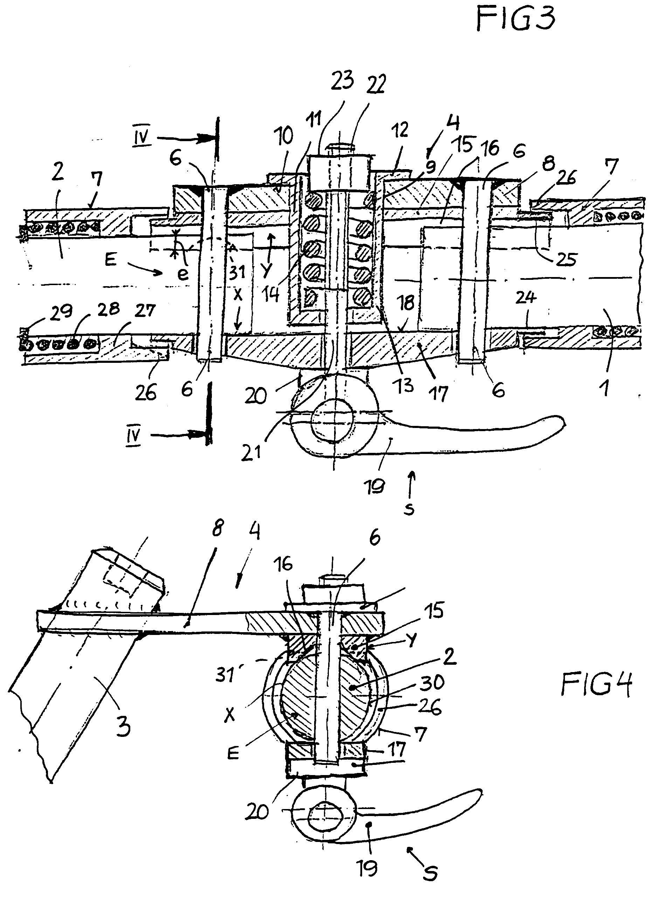

Bei der Ausführungsform der Fig. 3 und 4 bilden die innenliegenden Enden E der Lenkerhälften 1, 2, z.B. aus Vollmaterial bestehende, Eingriffselemente X mit zylindrischem Außenumfang 30 (denkbar ist aber auch ein mehreckiger Außenumfang 30). Die beiden Eingriffselemente X arbeiten zumindest in der Fahrstellung F formschlüssig mit einem gemeinsamen Gegeneingriffselement Y zusammen und werden durch den Spanndruck der Spannvorrichtung S in den Formschluß gezogen. In einem den Vorbau 4 bildenden Halteteil 8 in Plattenform sind die beiden Achsen 6 festgelegt. Eine zwischen den Achsen 6 liegende größere Bohrung 9 im Halteteil 8 nimmt einen Federtopf 11 auf, der sich mit einem Außenflansch 12 auf einem von der Oberseite des Halteteils 8 gebildeten Widerlager 10 abstützt. Der Bodenabschnitt 13 des Federtopfes 11 stützt eine inneliegende Druckfeder 14, auf deren anderem Federende eine Mutter 23 aufsitzt.

Das Gegeneingriffselement Y ist als an der Unterseite des Halteteils 8 festgelegte Querleiste 15 ausgebildet, die eine V- oder U-Längsnut 16 aufweist, die nach unten offen ist. Die Achsen 6 durchsetzen die überstehenden Enden E und ragen nach unten durch ein die Enden E von unten (Druckfläche 18) beaufschlagendes Druckstück 17, das auf den Achsen 6 auf- und abschiebbar ist. Die Spannvorrichtung S weist einen Exzenterhebel 19 auf, der mit einem Lager 20 an der Unterseite des Druckstücks 17 festgelegt ist und mit einem Ankerbolzen 21 durch das Druckstück 17 und den Bodenabschnitt 13 des Federtopfes 11 hindurchgreift. Der Ankerbolzen 21 weist ein Schraubende 22 für die Mutter 23 auf.

Bei dieser Ausführungsform ist an der Querleiste 15 an jedem Ende ein zweckmäßigerweise außen gerundete Vorsprung 25 angeformt. Ähnliche Vorsprünge 24 sind an den außenliegenden Enden des Druckstückes 17 vorgesehen. Die Vorsprünge 24, 25 sind von einem Steckende 26 jeder Sicherungshülse 7 übergreifbar, die mit einem Gleitabschnitt 27 in einem leichten Gleitsitz auf der Lenkerhälfte 1, 2 verschiebbar ist und durch eine Feder 28 in Richtung zu den Vorsprüngen 24, 25 beaufschlagt wird. Jede Feder 28 stützt sich an einem Anschlag 29 ab. Das Steckende 26 und/oder die Vorsprünge 24, 25 können gegensinnig kegelig ausgebildet sein (strichliert angedeutet), um auch dann die Verriegelung herbeiführen zu können, wenn das Druckstück 17 abgesenkt sein sollte.

In der in Fig. 3 gezeigten Fahrstellung zwingt die Spannvorrichtung S die Eingriffselemente X in einen Formschluß mit dem Gegeneingriffselement Y, wobei die Eingriffstiefe mit e angedeutet ist. Der mögliche Stellhub des Druckstücks 17 ist größer als die Eingriffstiefe e. Die V- oder U-förmige Längsnut 16 definiert die Fahrstellung der Lenkerhälften 1, 2. Es ist möglich, zusätzlich quer zur Längsnut 16 liegende Aufnahmen 31 in der Querleiste 15 vorzusehen, um die Lenkerhälften 1, 2 unter Vermittlung der Spannvorrichtung S auch in der Faltstellung K gemäß Fig. 2 formschlüssig festlegen zu können. Ferner ist es möglich, anstelle nur einer Längsnut 16 mindestens eine weitere, schräg dazuliegende Längsnut 16 vorzusehen, um auch eine weitere Fahrstellung F1 gemäß Fig. 1 einstellen zu können.

In der in den Fig. 3 und 4 gezeigten Fahrstellung F wird die Spannkraft des Exzenterhebels 19 über die Feder 14 und den Federtopf 11 übertragen. Zum Zusammenfalten der Lenkerhälften 1, 2 wird der Exzenterhebel 19 in Fig. 3 im Uhrzeigersinn verschwenkt, bis der Druck der Feder 14 aufhört und das Druckstück 17 frei beweglich ist. Das Druckstück 17 wird dann noch durch die Sicherungshülsen 7 festgehalten, so daß der Formschluß zwischen den Eingriffselementen X und dem Gegeneingriffselement Y aufrechterhalten bleibt. Erst nachdem die Sicherungshülsen 7 gegen die Kraft der Federn 28 weggezogen werden, sinkt das Druckstück 17 nach unten und lassen sich die Lenkerhälften 1, 2 in die Faltstellung verschwenken. In der Faltstellung werden sie ggfs. durch die Spannvorrichtung S festgelegt, gegebenenfalls unter Zuhilfenahme der Aufnahmen 31. Ist erneut die Fahrstellung einzustellen, dann werden die Lenkerhälften 1, 2 so weit verschwenkt, bis die Sicherungshülsen 7 selbsttätig unter der Federkraft über die Vorsprünge 24, 25 gleiten, dabei ggfs. das Druckstück 17 anheben und eine Grobverriegelung herstellen. Dann wird die Spannvorrichtung S betätigt.

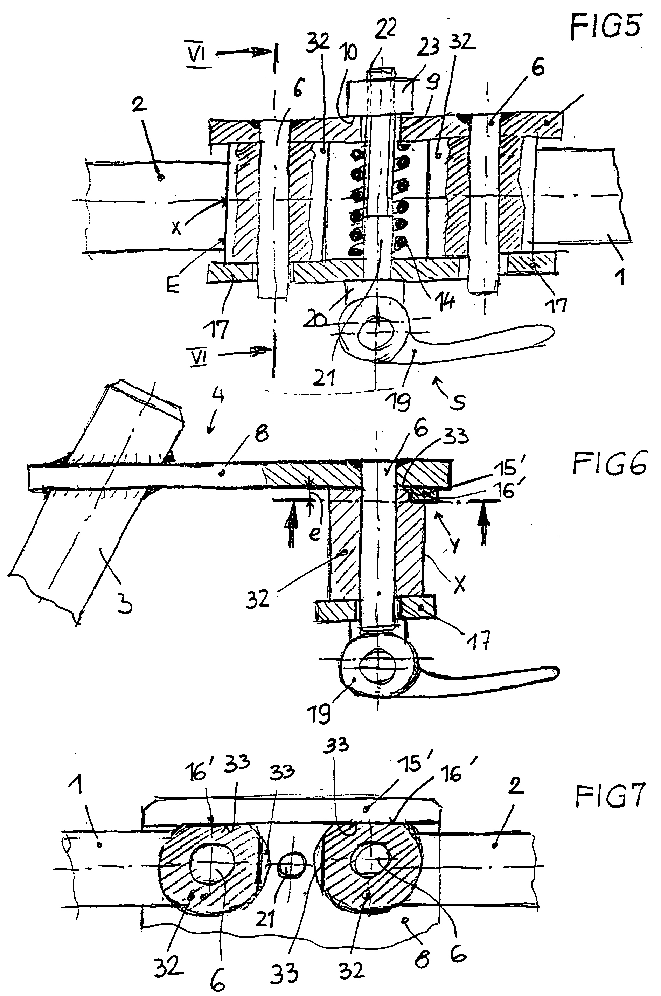

Die Ausführungsform der Fig. 5 bis 7 ist ohne Sicherungshülsen dargestellt. Es ist jedoch denkbar, auch hier Sicherungshülsen mit gleicher Funktion vorzusehen.

Die beiden Achsen 6 sind in den Fig. 5 bis 7 im Halteteil 8 festgelegt. Das Schraubende 22 des Ankerbolzens 21 durchsetzt eine kleinere Bohrung 9' des Halteteils. Die Mutter 23 sitzt direkt auf dem Widerlager 10. Die Feder 14 ist zwischen der Unterseite des Halteteils 8 und dem Druckstück 17 eingesetzt und zweckmäßigerweise so vorgespannt, daß sie das Druckstück 17 nach unten drückt. An jedem innenliegenden Ende E einer Lenkerhälfte 1, 2 ist eine Buchse 32 befestigt, die von einer Achse 6 durchsetzt wird. Im Außenumfang der Buchse 32 ist wenigstens eine Ausnehmung oder Abflachung 33 vorgesehen, die die Fahrstellung der Lenkerhälfte 1 oder 2 definiert. Das Gegeneingriffselement Y wird von einer Querleiste 15' mit rechteckigem Querschnitt gebildet, die sich neben den Achsen 6 entlang der Unterseite des Halteteils 8 erstreckt und zweckmäßigerweise mit diesem einstückig ist. Die Querleiste 15' bildet eine Abstützfläche 16', die mit der Ausnehmung oder Abflachung 33 formschlüssig zusammenwirkt, und zwar über die Eingriffstiefe e. Zweckmäßigerweise sind über den Umfang jeder Buchse 32 mehr als eine Ausnehmung oder Abflachung 33 verteilt angeordnet, um auch in der Faltstellung K (Fig. 2) oder in einer weiteren Fahrstellung F' (Fig. 1) die Lenkerhälften 1, 2 formschlüssig festlegen zu können.

Zum Falten der Lenkerhälften 1, 2 wird der Exzenterhebel 19 geöffnet. Die Feder 14 drückt das Druckstück 17 nach unten, und zwar mindestens über die Eingriffstiefe e, bis der formschlüssige Eingriff gelöst ist. Dann lassen sich die Lenkerhälften 1, 2 verschwenken und mit der Spannvorrichtung in der gewünschten neuen Stellung festlegen.

## Patentansprüche

1. Faltbarer Fahrradlenker (L), insbesondere für ein Faltfahrrad (F), mit einem, gegebenenfalls einen Vorbau tragenden, Lenkerschaft (3), an dem zwei Lenkerhälften (1, 2) mit ihren innenliegenden Enden (E) um die Enden annähernd senkrecht durchsetzende, an einem schaftfesten Halteteil (8) angeordnete Achsen jeweils zwischen wenigstens einer Fahrstellung und einer Faltstellung schwenkbar angelenkt sind, und mit einer Spannvorrichtung (S) zum lösbaren Festlegen der Lenkerhälften (1, 2) zumindest in der Fahrstellung, **dadurch gekennzeichnet,** daß jedes innenliegende Lenkerhälften-Ende (E) als Eingriffselement (X) ausgebildet ist, daß am Halteteil (8) wenigstens ein Gegeneingriffselement (Y) für das Eingriffselement (X) vorgesehen ist, und daß in Schwenkrichtung der Lenkerhälfte (1, 2) zwischen dem Eingriffselement (X) und dem Gegeneingriffselement (Y) unter dem Spanndruck der Spannvorrichtung (S) zumindest in einer Fahrstellung (F, F') der Lenkerhälfte (1, 2) ein formschlüssiger Eingriff herstellbar ist.

2. Fahrradlenker nach Anspruch 1, **gekennzeichnet durch** eine vorbestimmte, in Richtung der Achsen (6) begrenzte Eingriffstiefe (e) des formschlüssigen Eingriffs.

3. Fahrradlenker nach Anspruch 1, **dadurch gekennzeichnet,** daß die Spannvorrichtung (S) ein Einhebel-Spannglied (19, 20) zum Anlegen eines auf den Achsen (6) verschiebbar geführten Druckstücks (17) an die Eingriffselemente (X) aufweist, und daß das Druckstück (17) in Richtung der Achsen (6) über einen Hubweg verstellbar ist, der mindestens der Eingriffstiefe (e) entspricht.

4. Fahrradlenker nach Anspruch 1, **dadurch gekennzeichnet,** daß der Halteteil (8) eine Verankerungsplatte für die Achsen (6) und ein Widerlager (10) für die Spannvorrichtung (S) bildet, und daß das Gegeneingriffselement (Y) am Halteteil (8), vorzugsweise einstückig, in einer wenigstens eine Fahrstellung (F) definierenden Position angebracht ist.

5. Fahrradlenker nach wenigstens einem der Ansprüche 1 bis 4, **dadurch gekennzeichnet,** daß das Gegeneingriffselement (Y) eine Querleiste (15') an der Unterseite des Halteteils (8) ist, daß jedes Eingriffselement (X) eine am Lenkerhälften-Ende (E) fest angebrachte Buchse (32) ist, die am Außenumfang wenigstens eine Ausnehmung oder Abflachung (33) aufweist, in bzw. an der eine Sperrfläche (16') der Querleiste (15') zum Angriff bringbar ist.

6. Fahrradlenker nach Anspruch 5, **dadurch gekennzeichnet,** daß die Buchse (32) am Außenumfang mehrere in Umfangsrichtung verteilte Ausnehmungen oder Abflachungen (33) für mindestens eine Fahrstellung (F, F') und mindestens eine Faltstellung (K) der Lenkerhälften (1, 2) aufweist.

7. Fahrradlenker nach wenigstens einem der Ansprüche 1 bis 4, **dadurch gekennzeichnet,** daß das Gegeneingriffselement (Y) eine Querleiste (15) an der Unterseite des Halteteils (8) ist, daß die Querleiste (15) eine V- oder U-Längsnut (16) aufweist, in die der zylindrische oder mehreckig profilierte Außenumfang (30) des Endes (E) in der Fahrstellung (F) der Lenkerhälften (1, 2) zumindest mit einem Umfangsteil formschlüssig einpaßbar ist.

8. Fahrradlenker nach Anspruch 7, **dadurch gekennzeichnet,** daß die Querleiste (15) wenigstens eine weitere Aufnahme (31) quer oder schräg zur Längsnut (16) aufweist, in die der Außenumfang (30) des Lenkerhälften-Endes (E) in der Faltstellung (K) formschlüssig einpaßbar ist.

9. Fahrradlenker nach wenigstens einem der Ansprüche 1 bis 8, **dadurch gekennzeichnet,** daß das Einhebel-Spannglied (19, 20) einen am Druckstück (17) angreifenden, vorzugweise daran befestigten, Exzenter-Spannhebel (19) und einen Ankerbolzen (21) aufweist, der am Widerlager (10) des Halteteils (8), vorzugsweise längenverstellbar, abgestützt ist, und daß zwischen dem Halteteil (8) und dem Druckstück (17) wenigstens eine Druckfeder (14) eingesetzt ist, vorzugsweise eine den Ankerbolzen (21) umfassende Druckfeder (14).

10. Fahrradlenker nach wenigstens einem der Ansprüche 1 bis 9, **dadurch gekennzeichnet,** daß in einer Bohrung (9) des Halteteils (8) ein Federtopf (11) angeordnet ist, der mit einem Außenflansch (12) außen auf dem Halteteil (8) abstützbar ist und mit einem Bodenabschnitt (13) zum Druckstück (17) weist, und daß im Federtopf (11) die Druckfeder (14) angeordnet ist, die der Ankerbolzen (21) derart durchsetzt, daß die in den Federtopf (11) eintauchbare Mutter (23) auf dem dem Druckstück (17) abgewandten Federende aufsetzbar ist.

11. Fahrradlenker, insbesondere nach wenigstens einem der Ansprüche 1 bis 4, **dadurch gekennzeichnet,** daß eine unter Federbelastung selbsttätig und formschlüssig einrastende Grobverriegelungsvorrichtung für die in die Fahrstellung (F) geschwenkten Lenkerhälften (1, 2) vorgesehen ist.

12. Fahrradlenker nach Anspruch 11, **dadurch gekennzeichnet,** daß auf jeder Lenkerhälfte (1, 2) in einem Gleitsitz eine Sicherungsbuchse (7) gegen Federkraft verstellbar angeordnet ist, daß die Sicherungsbuchse (7) ein Steckende (26) aufweist, und daß am Halteteil (8) bzw. an der Querleiste (15, 15') und am Druckstück (17) innen in das Steckende (26) passende, von der Achse (6) beabstandete Vorsprünge (25, 24) angeformt sind, derart, daß die Sicherungshülse (7) mit ihrem Steckende (26) unter der Federkraft (28) in der Fahrstellung der Lenkerhälften (1, 2) selbsttätig über die Vorsprünge (25, 26) schiebbar ist.

13. Fahrradlenker nach Anspruch 12, **dadurch gekennzeichnet,** daß das Steckende (26) und/oder die Vorsprünge (24, 25) kegelig ausgebildet ist (sind).
